# EUROPÄISCHE PATENTSCHRIFT

(11) **EP 1 740 909 B1**
(45) Veröffentlichungstag und Bekanntmachung des Hinweises auf die Patenterteilung: **06.06.2007**
(21) Anmeldenummer: 05716539.1
(22) Anmeldetag: 06.04.2005
(51) Int. Cl.: G01D 5/14, G01R 33/09, G11B 5/39, B62D 15/02

(54) **SENSORELEMENT FÜR EINEN UMDREHUNGSZÄHLER**
SENSOR ELEMENT FOR A REVOLUTION COUNTER
ELEMENT CAPTEUR DESTINE A UN COMPTE-TOURS

(30) Priorität: 24.04.2004 DE 102004020149
(43) Veröffentlichungstag der Anmeldung: 10.01.2007
(73) Patentinhaber: Horst Siedle GmbH & Co. KG., 78120 Furtwangen (DE)
(72) Erfinder: DIEGEL, Marco, 07745 Jena (DE); MATTHEIS, Roland, 07743 Jena (DE)
(74) Vertreter: Schäfer, Wolfgang
(86) Internationale Anmeldenummer: PCT/EP2005/003588
(87) Internationale Veröffentlichungsnummer: WO 2005/106395

(56) Entgegenhaltungen:
- EP-A- 0 644 529
- WO-A-20/04020952
- DE-A1- 3 841 252
- US-A- 5 648 885

## Beschreibung

### Stand der Technik

Die Erfindung betrifft ein Sensorelement insbesondere für einen Umdrehungszähler nach dem Oberbegriff des Anspruchs 1.

Ein derartiges Sensorelement ist aus der WO 2004/020952 A2 bekannt. Der Schichtaufbau des bekannten Sensorelements sind derart ausgebildet, dass ohne eine anliegende Energieversorgung in dem Sensorelement eine Veränderung der Magnetisierung hervorgerufen wird, wenn ein magnetisches Feld an dem Sensorelement vorbeibewegt wird. Weiterhin ist das bekannte Sensorelement dazu geeignet, mehrere derartige Veränderungen zu speichern. Die Anzahl der gespeicherten Veränderungen kann zum Beispiel mit Hilfe des Giant Magneto Resistance (GMR) Effekts oder des Tunnel Magneto Resistance (TMR) Effekts oder des Colossal Magneto Resistance (CMR) Effekts ermittelt werden.

Es hat sich gezeigt, dass die Messbarkeit der genannten Veränderungen bei dem bekannten Sensorelement einen hohen Aufwand erfordert.

### Aufgabe, Lösung und Vorteile der Erfindung

Aufgabe der vorliegenden Erfindung ist es, ein Sensorelement insbesondere für einen Umdrehungszähler zu schaffen, bei dem die Veränderungen der Magnetisierung ohne größeren Aufwand ermittelbar sind.

Bei einem Sensorelement der eingangs genannten Art wird diese Aufgabe erfindungsgemäß durch die Merkmale des kennzeichnenden Teils des Anspruchs 1 gelöst.

Die Erfindung schlägt ein Sensorelement vor, das einen Schichtaufbau besitzt, der ohne eine Energieversorgung dazu geeignet ist, in dem Sensorelement eine Veränderung der Magnetisierung hervorzurufen, wenn ein magnetisches Feld an dem Sensorelement vorbeibewegt wird. Weiterhin ist der Schichtaufbau dazu geeignet, mehrere derartige Veränderungen zu speichern. Hinsichtlich der Gestalt des Sensorelements ist erfindungsgemäß vorgesehen, dass das Sensorelement ein spiralförmiges Gebilde aufweist.

Es hat sich gezeigt, dass das erfindungsgemäße spiralförmige Gebilde besonders gut dazu geeignet ist, die von einem sich vorbeibewegenden magnetischen Feld hervorgerufene.Veränderung der Magnetisierung des Sensorelements zu speichern. Insbesondere können mehrere derartige Veränderungen besonders gut von dem spiralförmigen Gebilde gespeichert werden.

Weiterhin erfordert es nur einen geringen Aufwand, die in dem spiralförmigen Gebilde gespeicherten Veränderungen von Magnetisierungen aus dem spiralförmigen Gebilde wieder auszulesen und damit zu ermitteln.

Das spiralförmige Gebilde ist deshalb besonders gut für das Einspeichern und Auslesen von Veränderungen der Magnetisierung des Sensorelements geeignet.

Bei einer vorteilhaften Weiterbildung der Erfindung ist ein Ende des spiralförmigen Gebildes mit einem als Wandgenerator bezeichneten Bereich verbunden. Vorzugsweise ist der Wandgenerator als etwa kreisförmige Fläche ausgebildet. Durch die kreisförmige Ausbildung des Wandgenerators kann die Magnetisierungsrichtung der Sensorschicht des Wandgenerators besonders leicht einem sich vorbeibewegenden magnetischen Feld folgen.

Bei einer weiteren vorteilhaften Weiterbildung der Erfindung ist der Wandgenerator mit einem ersten elektrischen Kontakt verbunden. Vorzugsweise ist das andere, gegebenenfalls sich verjüngende Ende des spiralförmigen Gebildes mit einem zweiten elektrischen Kontakt verbunden. Über die beiden Kontakte ist es in besonders einfacher Weise möglich, die in dem spiralförmigen Gebilde gespeicherten Veränderungen der Magnetisierung des Sensorelements auszulesen und damit zu ermitteln.

Bei einer weiteren vorteilhaften Weiterbildung der Erfindung weist das Sensorelement einen Schichtaufbau mit mindestens einer hartmagnetischen Schicht auf, die eine Referenzschicht darstellt, in der die Magnetisierung durch das Vorbeibewegen eines magnetischen Feldes nicht verändert wird. Vorzugsweise besitzt diese Magnetisierung der Referenzschicht eine Orientierung, die etwa parallel zu dem Verlauf des spiralförmigen Gebildes und immer in dieselbe Richtung des spiralförmigen Gebildes ausgerichtet ist.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

### Ausführungsbeispiele der Erfindung

- Figur 1: zeigt eine schematische Draufsicht auf ein Ausführungsbeispiel eines Umdrehungszählers mit einem ersten Ausführungsbeispiel eines erfindungsgemäßen Sensorelements,
- Figur 2: zeigt einen schematischen Querschnitt durch das Sensorelement der Figur 1,
- Figur 3: zeigt eine schematische Draufsicht auf das Sensorelement der Figur 1,
- Figuren 4a bis 4e: zeigen schematische Draufsichten auf das Sensorelement der Figur 1 mit schematisch dargestellten Magnetisierungen,
- Figur 5: zeigt eine schematische Draufsicht auf das Sensorelement der Figur 1 mit schematisch dargestellten Veränderungen,
- Figur 6: zeigt eine schematische Draufsicht auf ein zweites Ausführungsbeispiel des erfindungsgemäßen Sensorelements der Figur 1,
- Figur 7: zeigt eine schematische Draufsicht auf ein drittes Ausführungsbeispiel des erfindungsgemäßen Sensorelements der Figur 1,
- Figur 8: zeigt eine schematische Draufsicht auf ein viertes Ausführungsbeispiel des erfindungsgemäßen Sensorelements der Figur 1,
- Figur 9: zeigt eine schematische Draufsicht auf ein fünftes Ausführungsbeispiel des erfindungsgemäßen, Sensorelements der Figur 1, und
- Figuren 10a und 10b: zeigen schematische Draufsichten zweier Wheatstone-Brücken, die mit erfindungsgemäßen Sensorelementen aufgebaut sind.

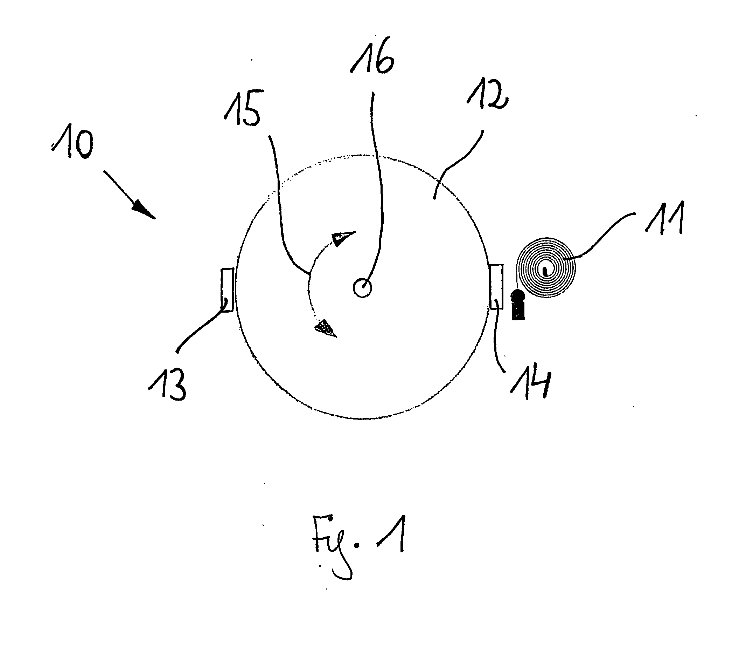

In der Figur 1 ist ein Umdrehungszähler 10 dargestellt, bei dem ein ortsfestes Sensorelement 11 einem Rotor 12 mit zwei Permanentmagneten 13, 14 zugeordnet ist. Es versteht sich, dass auch mehrere Sensorelemente vorhanden sein können, die beispielsweise in gleichen Abständen zueinander entlang des Umfangs des Rotors 12 angeordnet sind.

Der Rotor 12 ist gemäß dem Pfeil 15 um eine Achse 16 in beide Richtungen drehbar. Die beiden Permanentmagnete 13, 14 drehen sich zusammen mit dem Rotor 12. Bei einer Drehung des Rotors 12 werden die magnetischen Felder der Permanentmagnete 13, 14 an dem Sensorelement 11 vorbeibewegt und von diesem erfasst.

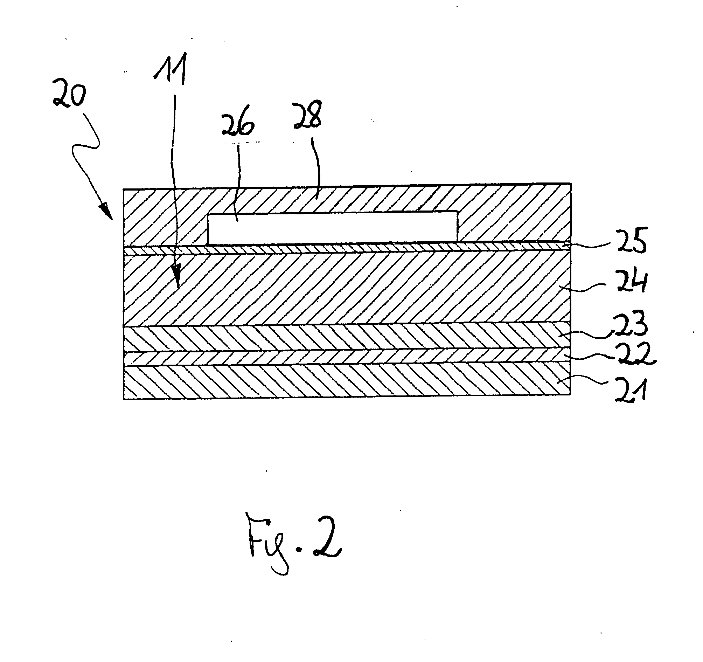

Die Permanentmagnete 13, 14 können dabei oberhalb oder unterhalb an dem Sensorelement 11 vorbeibewegt werden. Wesentlich ist, dass die magnetischen Felder der Permanentmagnete 13, 14 einen hinreichend großen, aber nicht zu starken Einfluss auf das Sensorelement 1 haben, insbesondere auf dessen nachfolgend anhand der Figur 2 erläuterten Schichten.

Die Magnetisierung der beiden Permanentmagnete 13, 14 ist gegensinnig zueinander ausgerichtet. Dies bedeutet, dass bei einer Drehung des Rotors 12 in dieselbe Richtung der erste Permanentmagnet 13 zum Beispiel mit einer Nord-Süd-Orientierung an dem Sensorelement 11 vorbeibewegt wird, während der zweite Permanentmagnet 14 mit einer Süd-Nord-Orientierung an dem Sensorelement 11 vorbeibewegt wird.

Aus der Sicht des Sensorelements 11 hat das Vorbeibewegen beispielsweise des Permanentmagneten 13 folgende Wirkungen: Zuerst "sieht" das Sensorelement 11 die aus dem Nordpol des Permanentmagneten 13 etwa senkrecht austretenden magnetischen Feldlinien, dann "sieht" das Sensorelement 11 die von dem Nordpol zum Südpol etwa parallel verlaufenden magnetischen Feldlinien des Permanentmagneten 13, und schließlich "sieht" das Sensorelement 11 die in den Südpol des Permanentmagneten 13 etwa senkrecht wieder eintretenden magnetischen Feldlinien. Insgesamt stellt dies aus der Sicht des Sensorelements 11 eine Drehung der magnetischen Feldlinien des Permanentmagneten 13 um 180 Grad während des Vorbeibewegens dar.

Die beiden Permanentmagnete 13, 14 sind in der Figur 1 im Abstand von 180 Grad am Umfang des Rotors 12 angebracht. Dieser Abstand kann auch asymmetrisch vorgesehen sein. Beispielsweise können die beiden Permanentmagnete 13, 14 auch unmittelbar benachbart zueinander am Umfang des Rotors 12 angebracht sein.

Der Umdrehungszähler 10 der Figur 1 ist zur berührungslosen Zählung und Speicherung von Umdrehungen des Rotors 10 durch das Sensorelement 11 vorgesehen. Diese Zählung und Speicherung erfordert dabei keine äußere Energieversorgung. Zum Auslesen der gespeicherten Umdrehungen kann zum Beispiel der Giant Magneto Resistance (GMR) Effekt oder der Tunnel Magneto Resistance (TMR) Effekt oder der Colossal Magneto Resistance (CMS) Effekt herangezogen werden.

In der Figur 2 ist ein Schichtaufbau 20 des Sensorelements 11 dargestellt, der zum Auslesen der gespeicherten Umdrehungen den GMR Effekt verwendet. Eine weichmagnetische Schicht 21 wird durch eine dünne unmagnetische Schicht 22 von einer hartmagnetischen Schicht 23 getrennt. Eine antiferromagnetische Schicht 24 verstärkt die hartmagnetischen Eigenschaften der hartmagnetischen Schicht 23 im Sinne eines sogenannten "pinning".

Letzteres hat zur Folge, dass die Magnetisierung in der hartmagnetischen Schicht 23 im Gegensatz zur Magnetisierung in der weichmagnetischen Schicht 21 nicht durch ein sich vorbeibewegendes magnetisches Feld eines der beiden Permanentmagneten 13, 14 verändert wird. Die weichmagnetische Schicht 21 stellt deshalb eine Sensorschicht und die hartmagnetische Schicht 23 eine Referenzschicht dar.

Auf der Schicht 24 befindet sich eine Kontaktierungsschicht 25, auf der ein erster Kontakt 26 vorgesehen ist. Wie noch erläutert wird, ist ein zweiter, in der Figur 2 nicht dargestellter Kontakt 27 an einer anderen Stelle des Sensorelements 11 vorhanden. Damit kann ein Messstrom zwischen den beiden Kontakten 26, 27 durch den Schichtaufbau 20 hindurch fließen. Wie ebenfalls noch erläutert wird, kann aus dem Messstrom auf die Anzahl der gespeicherten Umdrehungen geschlossen werden.

Die Kontaktierungsschicht 25 kann von einer Isolierschicht 28 abgedeckt sein. Zum Zwecke des Kontaktierens sind die Kontakte 26, 27 in diesem Fall zumindest teilweise frei, also nicht von der Isolierschicht 28 bedeckt. Der gesamte Schichtaufbau 20 kann beispielsweise auf einem Siliziumsubstrat aufgebracht sein. Der beschriebene Schichtaufbau 20 wird häufig auch als Spinventil bezeichnet.

Im Zusammenhang mit dem Tunnel Magneto Resistance (TMR) Effekt muss einer der beiden Kontakte 26, 27 unterhalb der unmagnetischen Schicht 22 angeordnet sein, und der andere der beiden Kontakte 26, 27 muss oberhalb der unmagnetischen Schicht 22 angeordnet sein.

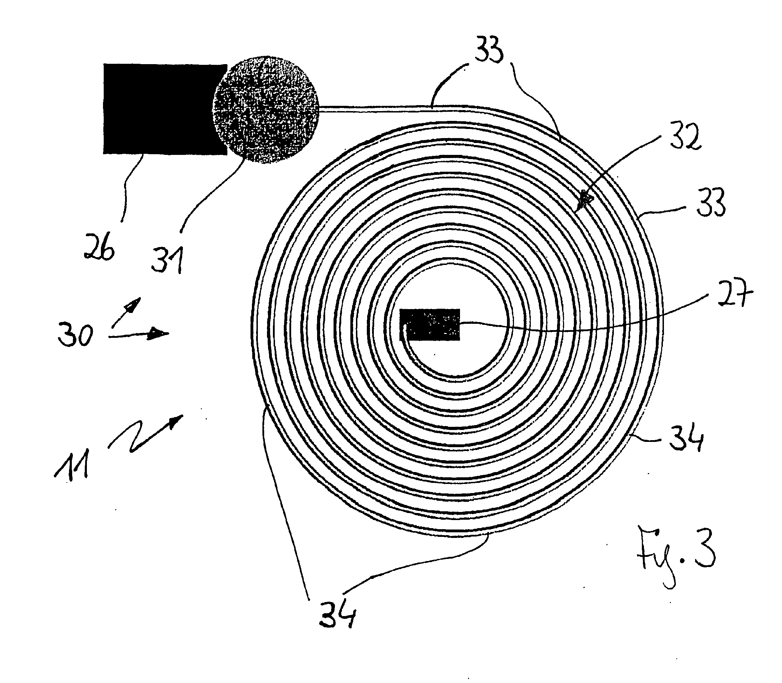

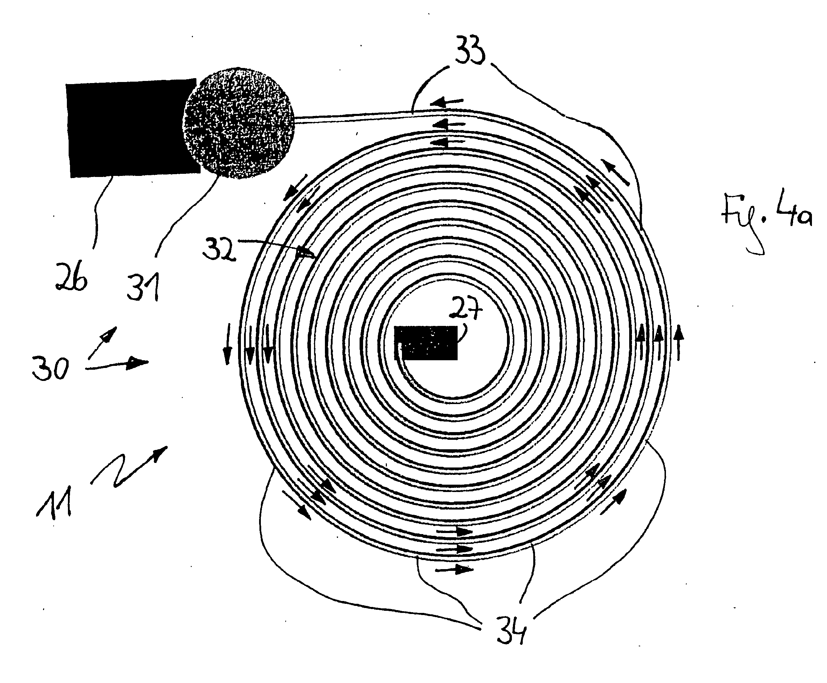

In der Figur 3 ist eine Gestalt 30 des Sensorelements 11 dargestellt, die einen Wandgenerator 31 und einen Wandspeicher 32 aufweist. Weiterhin sind in der Figur 3 die beiden Kontakte 26, 27 dargestellt.

Der Wandgenerator 31 ist als kreisförmige Fläche ausgebildet und mit dem Kontakt 26 verbunden. Der Wandspeicher 32 ist als Spirale ausgebildet, deren äußerer Anfang mit dem Wandgenerator 31 verbunden ist, und die sich ausgehend von ihrem Anfang aus Spiralbögen zusammensetzt, deren Radien immer kleiner werden. Die äußerste Windung der Spirale der Figur 3 setzt sich beispielhaft aus den Spiralbögen 33, 34 zusammen. Am Ende der Spirale und damit im Inneren derselben ist die Spirale mit dem Kontakt 27 verbunden.

Es wird darauf hingewiesen, dass es sich bei dem Wandspeicher 32 nicht nur um eine Spirale handeln kann, sondern auch um ein anderes spiralförmiges Gebilde. So kann als Wandspeicher 32 beispielhaft ein aus Geradenstücken zusammengesetztes, spiralartiges Gebilde vorgesehen sein, bei dem die Länge der Geradenstücke immer kleiner wird, je weiter die Geradenstücke im Inneren des Gebildes angeordnet sind. Ebenfalls kann als Wandspeicher 32 beispielhaft ein aus quadratartigen oder rechteckförmigen Stücken zusammengesetztes, viereckiges oder mehreckiges spiralförmiges Gebilde vorgesehen sein, bei dem die Größe der quadratartigen oder rechteckförmigen Stücke immer kleiner wird, je weiter die Stücke im Inneres des Gebildes angeordnet sind. Dabei ist es zusätzlich möglich, dass die Ecken dieser spiralartigen Gebilde abgerundet sind.

Nachfolgend wird das vorliegende Ausführungsbeispiel anhand der in der Figur 3 als Wandspeicher 32 dargestellten Spirale erläutert. Diese Erläuterungen gelten entsprechend jedoch auch für jegliches anderes spiralförmiges Gebilde.

Die in der Figur 3 dargestellte Spirale wird von einem Streifen gebildet, der beispielsweise eine Breite von etwa 2 Mikrometer besitzt und sich mit einem Abstand von etwa 2 Mikrometer von außen nach innen windet. Beispielhaft weist die Spirale zehn Windungen auf.

Am Ende der Spirale verjüngt sich der vorgenannte Streifen und läuft spitz aus. Die Breite des Streifens wird dort also kleiner als etwa 2 Mikrometer. Dieser spitze Endbereich der Spirale kann sich entweder nur geringfügig in den Bereich des Kontakts 27 erstrecken oder im wesentlichen vollständig unter dem Kontakt 27 befinden.

Durch den spitz auslaufenden Endbereich der Spirale wird erreicht, dass in diesem Endbereich keine Domänenwand erzeugt oder abgespeichert werden kann. Durch die Anordnung des spitzen Endbereichs unter dem Kontakt 27 wird erreicht, dass sich die elektrische Verbindung zwischen der Spirale und dem Kontakt 27 nicht verschlechtert.

Durch die kreisförmige Ausbildung des Wandgenerators 31 kann die Magnetisierungsrichtung der Sensorschicht des Wandgenerators 31 leicht einem sich vorbeibewegenden magnetischen Feld folgen. Wie bereits erwähnt wurde, verändert sich die Magnetisierungsrichtung der Referenzschicht aufgrund eines sich vorbeibewegenden magnetischen Feldes jedoch nicht.

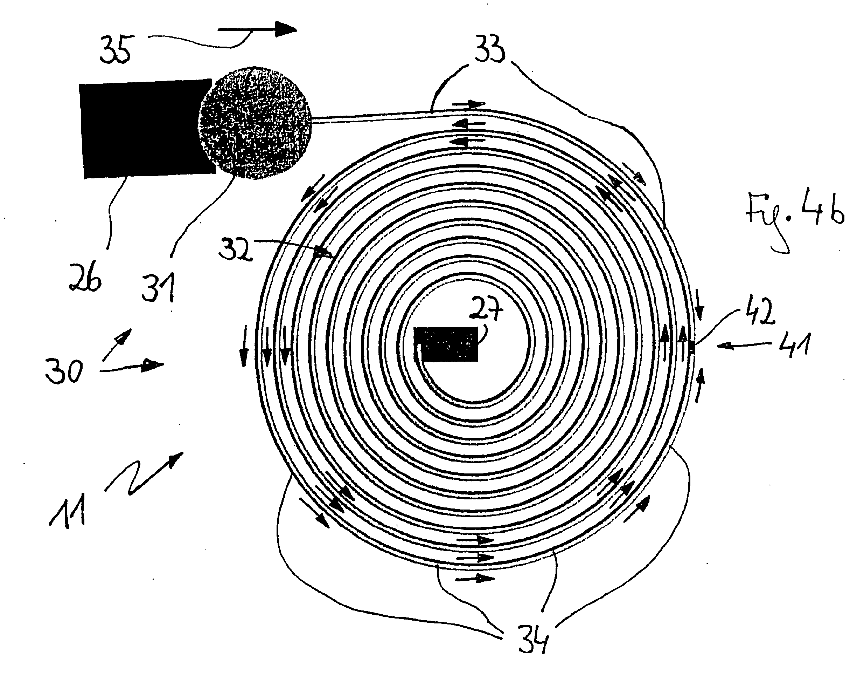

In den Figuren 4a bis 4e ist das Sensorelement 11 in derselben Weise nochmals dargestellt, wie dies anhand der Figur 3 erläutert wurde. Zusätzlich sind in den Figuren 4a bis 4e jedoch Pfeile entlang des Verlaufs der Spirale des Wandspeichers 32 eingezeichnet. Diese Pfeile kennzeichnen die Magnetisierungsrichtung der Spirale, und zwar beziehen sich die einzelnen Pfeile immer auf denjenigen Bereich der Spirale, an dem sie jeweils eingezeichnet sind.

In der Figur 4a weisen alle im Bereich des Wandspeichers 32 eingezeichneten Magnetisierungsrichtungen dieselbe Richtung auf, und zwar zeigen alle Pfeile im Gegenuhrzeigersinn vom Ende der Spirale, also vom Kontakt 27, in Richtung zum Anfang der Spirale, also in Richtung zum Wandgenerator 31. Es versteht sich, dass alle Pfeile auch im Uhrzeigersinn und damit die durch die Pfeile dargestellten Magnetisierungsrichtungen entgegengesetzt ausgerichtet sein könnten.

Zum Zwecke der Erläuterung der Funktionsweise des Sensorelements 11 wird davon ausgegangen, dass die in der Figur 4a dargestellte Orientierung der Magnetisierungsrichtung der Spirale in einem ersten Zeitpunkt in der weichmagnetischen Schicht 21, also in der Sensorschicht, und auch in der hartmagnetischen Schicht 23, also in der Referenzschicht des Wandspeichers 32 vorhanden ist. Dies kann durch eine entsprechende Formierung des Wandspeichers 32, also eine Vormagnetisierung der Sensorschicht und der Referenzschicht der Spirale erreicht werden.

Die Orientierung der Referenzschicht ist immer etwa parallel zu dem Verlauf des Streifens der Spirale und immer in dieselbe Richtung der Spirale ausgerichtet. Die Richtung, in der die Magnetisierung der Spirale ausgerichtet ist, also ob dies im Uhrzeigersinn oder im Gegenuhrzeigersinn erfolgt, ist dabei nicht wesentlich. Wesentlich ist nur, dass es immer dieselbe Richtung entlang der gesamten Spirale ist. Diese Orientierung der Magnetisierung bleibt in der hartmagnetischen Referenzschicht unveränderlich erhalten.

Es wird nunmehr beispielsweise der Permanentmagnet 13 aufgrund einer Drehung des Rotors 12 an dem Sensorelement 11 vorbeibewegt. Wie erläutert wurde, hat dies zur Folge, dass das Sensorelement 11 eine Drehung des magnetischen Felds des Permanentmagneten 13 um 180 Grad "sieht". Wie ebenfalls erläutert wurde, folgt die Magnetisierungsrichtung der Sensorschicht des Wandgenerators 31 dem sich vorbeibewegenden magnetischen Feld des Permanentmagneten 13. Die Magnetisierungsrichtung der Referenzschicht ändert sich jedoch nicht.

In der Figur 4b ist die Orientierung der Magnetisierungsrichtung der Spirale in der weichmagnetischen Schicht 21, also in der Sensorschicht des Wandspeichers 32 dargestellt, und zwar in einem zweiten Zeitpunkt, in dem sich der Permanentmagnet 13 an dem Sensorelement 11 bereits vorbeibewegt hat. Zur Verdeutlichung ist in der Figur 4b diejenige Magnetisierungsrichtung als Pfeil 35 eingezeichnet, die das Sensorelement 11 am Ende der Vorbeibewegung des Permanentmagneten 13 "gesehen hat".

Wie erläutert wurde, ist die Magnetisierungsrichtung des Wandgenerators 31 dem magnetischen Feld des Permanentmagneten 13 gefolgt, so dass der Pfeil 35 der Figur 4b auch die Magnetisierungsrichtung des Wandgenerators 31 repräsentiert.

Ein Vergleich der Richtung des die Magnetisierungsrichtung des Wandgenerators 31 darstellenden Pfeils 35 der Figur 4b und der Magnetisierungsrichtung des Anfangs der Spirale vor dem Vorbeibewegen des Permanentmagneten 13 gemäß der Figur 4a zeigt, dass diese Magnetisierungsrichtungen einander entgegengesetzt sind. Dies hat zur Folge, dass etwa im Bereich der Verbindung des Wandgenerators 31 und des Anfangs der Spirale eine Domänenwand entsteht (nicht dargestellt). Aufgrund der einmaligen Veränderung der Magnetisierungsrichtung handelt es sich dabei um eine 180-Grad-Wand.

Diese 180-Grad-Wand wandert von ihrem Entstehungsort am Anfang der Spirale entlang derselben an eine Stelle 41 der Spirale. Dort ist die vorgenannte 180-Grad-Wand als dunkles Rechteck mit dem Bezugszeichen 42 gekennzeichnet. An dieser Stelle 41 weist die 180-Grad-Wand 42 einen energetisch günstigeren Zustand auf als an ihrem Entstehungsort, da nur dort die benachbarten Spiralbögen 33, 34 keine antiparallelen Komponenten zu der durch den Pfeil 35 gekennzeichneten Magnetisierungsrichtung aufweisen.

Ein Vergleich der Figur 4b mit der Figur 4a zeigt, dass sich die Magnetisierungsrichtung der Spirale in der Sensorschicht des Wandspeichers 32 im Bereich des ersten Spiralbogens 33 verändert hat, im Bereich des zweiten Spiralbogens 34 und der nachfolgenden Spiralbögen jedoch nicht.

An der etwa zwischen dem ersten Spiralbogen 33 und dem zweiten Spiralbogen 34 vorhandenen Stelle 41 treffen die einander entgegengesetzten Magnetisierungsrichtungen der beiden Spiralbögen 33, 34 aufeinander. Dies ergibt sich aus der Figur 4b dadurch, dass dort die dargestellten Pfeile in entgegengesetzte Richtungen zeigen. Etwa an dieser Stelle 41 der Spirale befindet sich die 180-Grad-Wand 42.

Es wird nunmehr der Rotor 12 in dieselbe Richtung weitergedreht, so dass der Permanentmagnet 14 an dem Sensorelement 11 vorbeibewegt wird. Dies hat wiederum zur Folge, dass die Magnetisierungsrichtung der Sensorschicht des Wandgenerators 31 dem sich vorbeibewegenden magnetischen Feld des Permanentmagneten 14 folgt. Die Magnetisierungsrichtung der Referenzschicht ändert sich jedoch nicht.

In der Figur 4c ist die Orientierung der Magnetisierungsrichtung der Spirale in der weichmagnetischen Schicht 21, also in der Sensorschicht des Wandspeichers 32 dargestellt, und zwar in einem dritten Zeitpunkt, in dem sich der Permanentmagnet 14 an dem Sensorelement 11 bereits vorbeibewegt hat. Ein Vergleich der Figur 4c mit der Figur 4b zeigt, dass sich die Magnetisierungsrichtung der Spirale in der Sensorschicht des Wandspeichers 32 im Bereich des ersten Spiralbogens 33 und des zweiten Spiralbogens 34 verändert hat, in den danach folgenden Spiralbögen jedoch nicht. Die Veränderung in dem ersten Spiralbogen 33 ist eine Folge einer erneuten Änderung der Magnetisierungsrichtung des Wandgenerators 31 aufgrund des Vorbeibewegens des Permanentmagneten 14. Die Veränderung in dem zweiten Spiralbogen 34 ergibt sich daraus, dass die 180-Grad-Wand 42 wieder weiter gewandert ist, und zwar aufgrund der vorstehend genannten erneuten Änderung der Magnetisierungsrichtung des ersten Spiralbogens 33 und des daraus resultierenden veränderten energetischen Zustands der 180-Grad-Wand 42.

Die 180-Grad-Wand 42, die im zweiten Zeitpunkt der Figur 4b an der Stelle 41 vorhanden war, befindet sich damit im dritten Zeitpunkt der Figur 4c an einer Stelle 43, die etwa 180 Grad nach der Stelle 41 im Verlauf der Spirale des Wandspeichers 32 angeordnet ist.

An der Stelle 41 der Figur 4c treffen wiederum die einander entgegengesetzten Magnetisierungsrichtungen der beiden Spiralbögen 33, 34 aufeinander. Etwa an dieser Stelle 41 der Spirale befindet sich somit eine weitere 180-Grad-Wand 44, die in der Figur 4c als dunkles Rechteck kenntlich gemacht ist. Diese 180-Grad-Wand entsteht auf die bereits erläuterte Weise im Bereich des Anfangs der Spirale und wandert dann zu der Stelle 41.

Es wird nunmehr der Rotor 12 in dieselbe Richtung weitegedreht, so dass nunmehr wiederum der Permanentmagnet 13 an dem Sensorelement 11 vorbeibewegt wird. Dies hat zur Folge, dass die Magnetisierungsrichtung der Sensorschicht des Wandgenerators 31 dem sich vorbeibewegenden magnetischen Feld des Permanentmagneten 13 folgt.

In der Figur 4d ist die Orientierung der Magnetisierungsrichtung der Spirale in der weichmagnetischen Schicht 21, also in der Sensorschicht des Wandspeichers 32 dargestellt, und zwar in einem vierten Zeitpunkt, in dem sich der Permanentmagnet 13 an dem Sensorelement 11 bereits vorbeibewegt hat.

In der Figur 4d ist die 180-Grad-Wand 42 erneut weiter gewandert, und zwar zu der Stelle 41 der Spirale. Dort befindet sich die 180-Grad-Wand 42 jedoch in der zweiten Windung der Spirale und nicht wie in der Figur 4b in der ersten äußeren Windung. Weiterhin ist die 180-Grad-Wand 44 in der äußeren Windung der Spirale von der Stelle 41 zu der Stelle 43 weiter gewandert. Und schließlich ist an der Stelle 41 in der ersten, äußeren Windung der Spirale eine weitere 180-Grad-Wand 45 entstanden.

Es wird nunmehr der Rotor 12 in dieselbe Richtung weitergedreht, so dass der Permanentmagnet 14 an dem Sensorelement 11 erneut vorbeibewegt wird. Dies hat zur Folge, dass die Magnetisierungsrichtung der Sensorschicht des Wandgenerators 31 dem sich vorbeibewegenden magnetischen Feld des Permanentmagneten 14 folgt.

In der Figur 4e ist die Orientierung der Magnetisierungsrichtung der Spirale in der weichmagnetischen Schicht 21, also in der Sensorschicht des Wandspeichers 32 dargestellt, und zwar in einem fünften Zeitpunkt, in dem sich der Permanentmagnet 14 an dem Sensorelement 11 bereits vorbeibewegt hat.

In der Figur 4e ist die 180-Grad-Wand 42 erneut weiter gewandert, und zwar zu der Stelle 43 der zweiten Windung der Spirale. Weiterhin ist die 180-Grad-Wand 44 zu der Stelle 41 der zweiten Windung der Spirale weiter gewandert. Entsprechend ist die 180-Grad-Wand 45 zu der Stelle 43 der äußeren Windung weiter gewandert. Und schließlich ist an der Stelle 41 in der ersten, äußeren Windung der Spirale eine weitere 180-Grad-Wand 46 entstanden.

Vom ersten Zeitpunkt der Figur 4a bis zum fünften Zeitpunkt der Figur 4e wurde jeder der beiden Permanentmagnete 13, 14 zwei Mal an dem Sensorelement 11 vorbeibewegt. Der Rotor 12 hat sich damit um zwei Umdrehungen gedreht. Wie erläutert wurde, sind bei diesen beiden Umdrehungen des Rotors 12 in der Spirale des Wandspeichers 32 insgesamt vier Domänenwände entstanden, nämlich die vier 180-Grad-Wände 42, 44, 45, 46. Es versteht sich, dass bei einer weiteren Drehung des Rotors 12 in derselben Richtung in entsprechender Weise weitere Domänenwände entstehen würden.

Wie ebenfalls erläutert wurde und wie insbesondere aus der Figur 4e hervorgeht, sind die Magnetisierungsrichtungen in der Sensorschicht der Spirale zwischen den einzelnen 180-Grad-Wänden immer einander entgegengesetzt. Dies bedeutet, dass sich in den beiden äußeren Windungen der Spirale die Magnetisierungsrichtungen nach jeder 180-Grad-Wand 42, 44, 45, 46 immer umkehren.

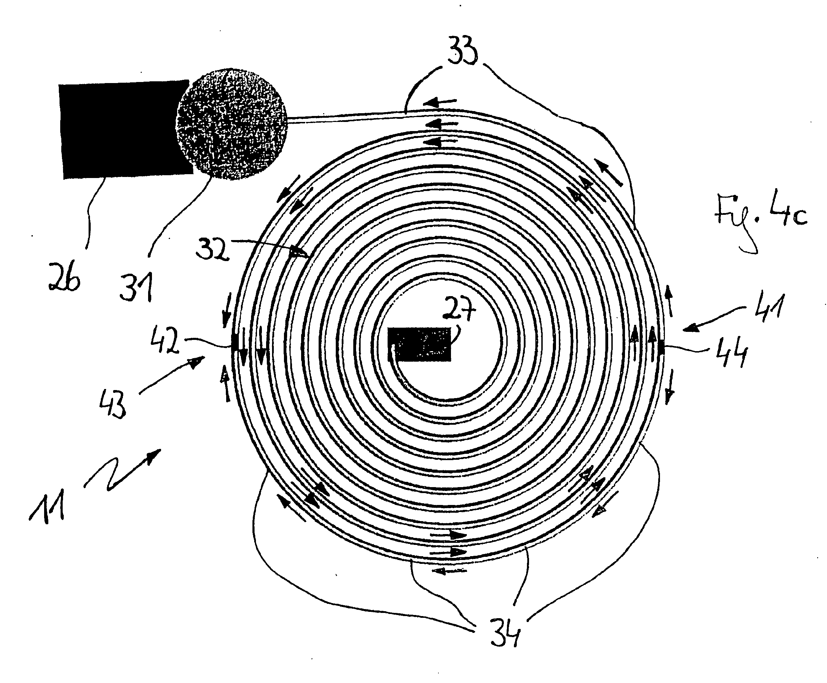

In der Figur 5 ist das Sensorelement 11 in derselben Weise nochmals dargestellt, wie dies anhand der Figur 3 sowie der Figuren 4a bis 4e erläutert wurde. In der Figur 5 sind die unterschiedlichen Magnetisierungen der Spirale des Wandspeichers 32 jedoch nicht wie in den Figuren 4a bis 4e mit Pfeilen dargestellt, sondern es sind diejenigen Spiralbögen dunkel gekennzeichnet, deren Magnetisierung sich in der Figur 4e von der Magnetisierung der Figur 4a unterscheidet. Ein Vergleich der beiden genannten Figuren zeigt, dass es sich dabei um den Spiralbogen 34 der äußeren, ersten Windung der Spirale handelt, sowie um einen Spiralbogen 36, der benachbart zu dem Spiralbogen 34 in der zweiten, nächst inneren Windung der Spirale verläuft.

Die veränderte Magnetisierungsrichtung der Spiralbögen 34, 36 der Figur 5 bezieht sich, wie erläutert wurde, nur auf die Sensorschicht des Wandspeichers 32. In der Referenzschicht der jeweiligen Spiralbögen 34, 36 findet jedoch keine Veränderung der Magnetisierungsrichtung statt. Dies hat zur Folge, dass im Bereich der Spiralbögen 34, 36 die Magnetisierung der Sensorschicht antiparallel ausgerichtet ist zur Magnetisierung der Referenzschicht. Dies ist gleichbedeutend damit, dass die beiden Spiralbögen 34, 36 einen elektrischen Widerstand bilden, der im Vergleich zu den anderen Spiralbögen, in denen die Magnetisierung der Sensorschicht und der Referenzschicht parallel zueinander ausgerichtet sind, hoch ist.

Der elektrische Widerstand der gesamten Spirale kann mit Hilfe des eingangs bereits erwähnten, über die Kontakte 26, 27 fließenden Messstromes ermittelt werden. Ist ein Spiralbogen innerhalb der Spirale vorhanden, in dem die Sensorschicht und die Referenzschicht antiparallel magnetisiert sind, so führt dies zu einem erhöhten Widerstand. Sind mehrere derartige Spiralbögen vorhanden, so führt dies zu einem entsprechend mehrfach erhöhten Widerstand.

Damit ein Spiralbogen in einer äußeren Windung der Spirale etwa dieselbe Widerstandsänderung hervorruft wie ein Spiralbogen in einer inneren Windung, kann vorgesehen sein, dass sich die Breite des die Spirale bildenden Streifens über den gesamten Verlauf ändert. Beispielsweise kann die Breite des Streifens im Zusammenhang mit dem Giant Magneto Resistance (GMR) Effekt von außen nach innen immer kleiner werden.

Wie erläutert wurde, sind die beiden in der Figur 5 dargestellten, antiparallel magnetisierten Spiralbögen 34, 36 durch zwei Umdrehungen des Rotors 12 entstanden. Bei dem beschriebenen Ausführungsbeispiel entspricht also ein antiparallel magnetisierter Spiralbogen des Wandspeichers 32 genau einer Umdrehung des Rotors 12.

Insgesamt kann somit über die Kontakte 26, 27 des Sensorelements 11 auf den elektrischen Widerstand der Spirale geschlossen werden. Daraus kann auf die Anzahl der vorhandenen, antiparallel magnetisierten Spiralbögen und damit auf die Anzahl der durchgeführten Umdrehungen des Rotors 12 geschlossen werden.

Wird der Rotor 12 in seine Gegenrichtung gedreht, so bewirkt dies eine Änderung des energetischen Zustands der in dem Wandspeicher 32 vorhandenen 180-Grad-Wände. Dies hat zur Folge, dass diese vorhandenen 180-Grad-Wände, wie bereits erläutert wurde, sich entlang der Spirale in Richtung eines möglichst günstigen energetischen Zustands bewegen. Aufgrund der Drehung des Rotors 12 in Gegenrichtung, wandern auch die vorhandenen 180-Grad-Wände in Gegenrichtung.

Weiterhin entstehen entsprechend der bereits beschriebenen Funktionsweise wiederum 180-Grad-Wände in dem Wandgenerator 31, die jedoch entgegengesetzt zu den vorstehend erläuterten 180-Grad-Wänden ausgerichtet sind. Dies hat zur Folge, dass die nunmehr nacheinander entstehenden 180-Grad-Wände die vorhandenen und in Gegenrichtung wandernden 180-Grad-Wände nacheinander auslöschen. Die in der Figur 5 dargestellten antiparallel magnetisierten Spiralbögen verschwinden damit von innen nach außen, bis der Zustand der Figur 4a wieder erreicht ist.

Während dieser Rückwärtsdrehung des Rotors 12 kann die Anzahl der vorhandenen antiparallel magnetisierten Spiralbögen, wie erläutert wurde, über die Kontakte 26, 27 auf die bereits erläuterte Weise ermittelt werden.

Wird der Rotor 12 auch dann noch in Gegenrichtung weitergedreht, nachdem alle in dem Wandspeicher 32 vorhandenen 180-Grad-Wände ausgelöscht sind, so entstehen neue 180-Grad-Wände, die auf die beschriebene Weise in den Wandspeicher 32 hinein wandern. Der Drehsinn dieser neuen 180-Grad-Wände ist dabei entgegengesetzt zu dem Drehsinn der ausgelöschten 180-Grad-Wände.

Wird der Rotor 12 so lange weitergedreht, bis alle Windungen der Spirale des Wandspeichers 31 mit 180-Grad-Wänden besetzt sind, so entstehen bei einem Weiterdrehen des Rotors 12 keine weiteren 180-Grad-Wände. Die Anzahl der vorhandenen 180-Grad-Wände bleibt dann konstant erhalten.

Die erläuterte Funktionsweise des Sensorelements 11 ist hinsichtlich der Entstehung von Domänenwänden und daraus resultierenden antiparallel magnetisierten Spiralbögen unabhängig von einer Energieversorgung. Dies bedeutet, dass eine Drehung des Rotors 12 immer zu einer Veränderung der Magnetisierungsrichtungen führt, und zwar auch dann, wenn an den Kontakten 26, 27 keine elektrische Anbindung vorhanden ist. Die Anzahl der durchgeführten Umdrehungen des Rotors 12 wird also ohne eine Energieversorgung in der Spirale des Wandspeichers 32 gezählt und gespeichert.

Nur zum Auslesen des Wandspeichers 32, also zum Auslesen der Anzahl der durchgeführten Umdrehungen des Rotors 12, ist es erforderlich, einen Messstrom über die Kontakte 26, 27 fließen zu lassen. Wie erwähnt, ist dieser Messstrom jedoch für die Zählung der Umdrehungen nicht erforderlich.

Bei dem beschriebenen Sensorelement 11 ist der Wandgenerator 31 am Anfang der den Wandspeicher 32 bildenden Spirale angeordnet, während am Ende der Spirale nur der Kontakt 27 vorhanden ist. Alternativ ist es möglich, den Wandgenerator nicht am Anfang, sondern nur am Ende der Spirale vorzusehen.

Ebenfalls ist es alternativ möglich, am Anfang und am Ende der Spirale jeweils einen Wandgenerator vorzusehen.

Der beschriebene Umdrehungszähler 10 kann insbesondere bei einem Kraftfahrzeug eingesetzt werden. Beispielsweise kann der Rotor 12 des Umdrehungszählers 10 mit einer Lenkwelle des Kraftfahrzeugs gekoppelt werden. Wird diese Lenkwelle gedreht, so wird dies von dem Umdrehungszähler erfasst. Diese erfasste Anzahl der Umdrehungen bleibt dabei auch dann in dem Umdrehungszähler erhalten, wenn das Kraftfahrzeug abgestellt wird, oder wenn ein Defekt in der Energieversorgung des Kraftfahrzeugs auftritt.

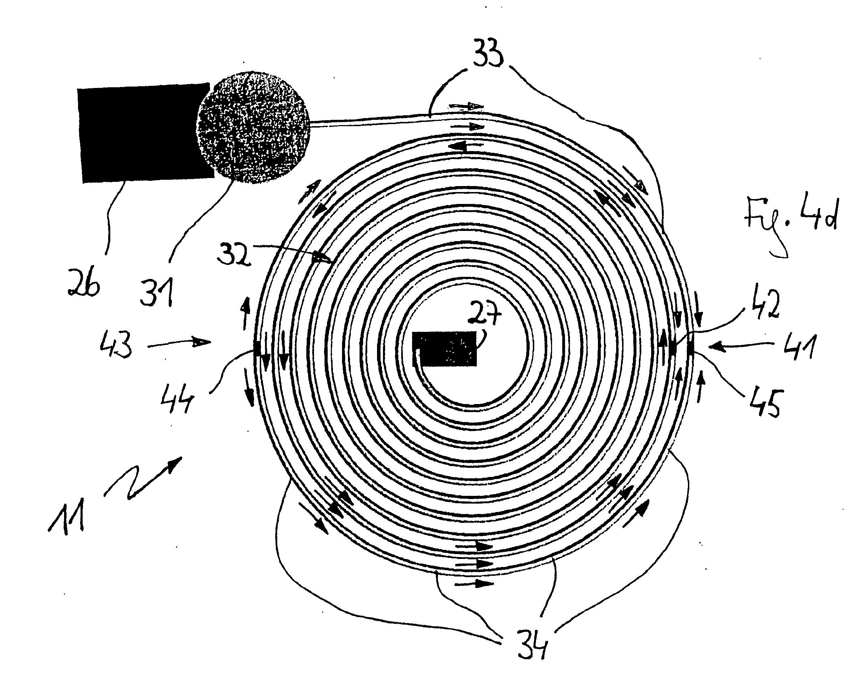

In der Figur 6 ist eine Gestalt 60 des Sensorelements 11 dargestellt, die von der Gestalt 30 des Sensorelements 11 der Figur 3 abweicht. So weist das Sensorelement 11 der Figur 6 mehrere, zueinander parallele Geradenstücke auf, die,über halbkreisförmige Stücke miteinander verbunden sind und insgesamt eine Spirale und damit den Wandspeicher 32 bilden.

Bei dem Sensorelement 11 der Figur 6 ist der Wandgenerator 31 im Inneren der Spirale angeordnet. Weiterhin sind in der Figur 6 die beiden Kontakte 26, 27 angedeutet. Die Magnetisierung der hartmagnetischen Schicht 23, also der Referenzschicht, ist bei dem Sensorelement 11 der Figur 6 vorzugsweise etwa parallel zu den Geradenstücken ausgerichtet.

Im übrigen gelten für das Sensorelement 11 der Figur 6 die Erläuterungen zu den Figuren 1 bis 5 entsprechend.

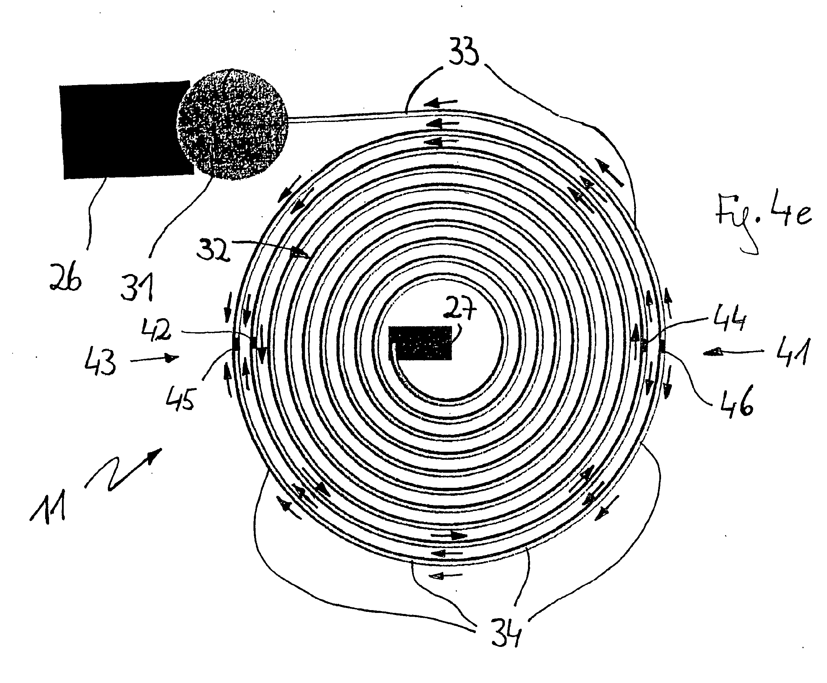

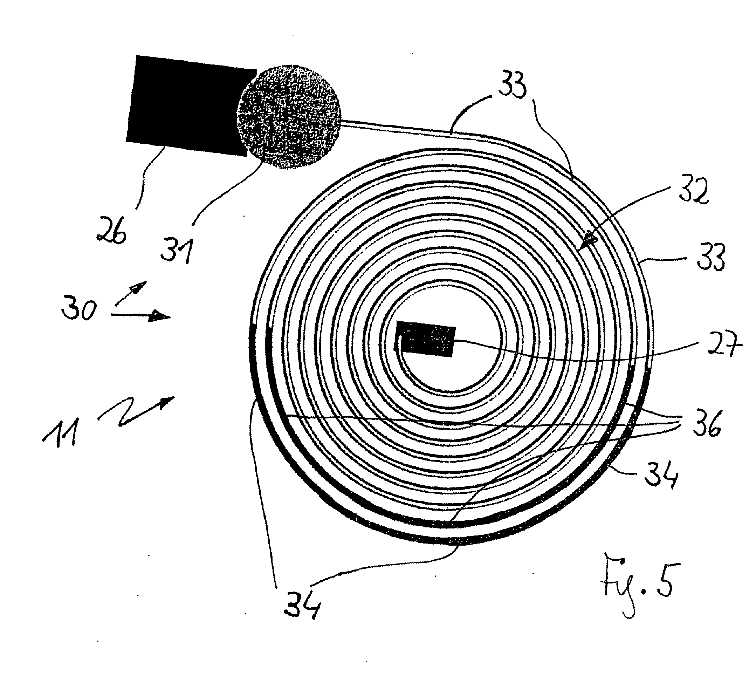

In der Figur 7 ist eine Gestalt 70 des Sensorelements 11 dargestellt, die von der Gestalt 30 des Sensorelements 11 der Figur 3 abweicht. Dabei ist die Gestalt 70 der Figur 7 ähnlich ausgebildet wie die Gestalt 60 der Figur 6. Im Unterschied zur Figur 6 stellt die Gestalt 70 der Figur 7 jedoch eine Doppelspirale dar.

Eine der beiden Spiralen des Sensorelements 11 der Figur 7 entspricht dabei der Spirale des Sensorelements 11 der Figur 6 und damit dem Wandspeicher 32. Die andere Spirale des Sensorelements der Figur 7 ist hingegen zum Herausführen des inneren elektrischen Kontaktes vorgesehen. Damit sind bei dem Sensorelement 11 der Figur 7 beide Kontakte 26, 27 von außen zugänglich.

Im übrigen gelten für das Sensorelement 11 der Figur 7 die Erläuterungen zu den Figuren 1 bis 6 entsprechend.

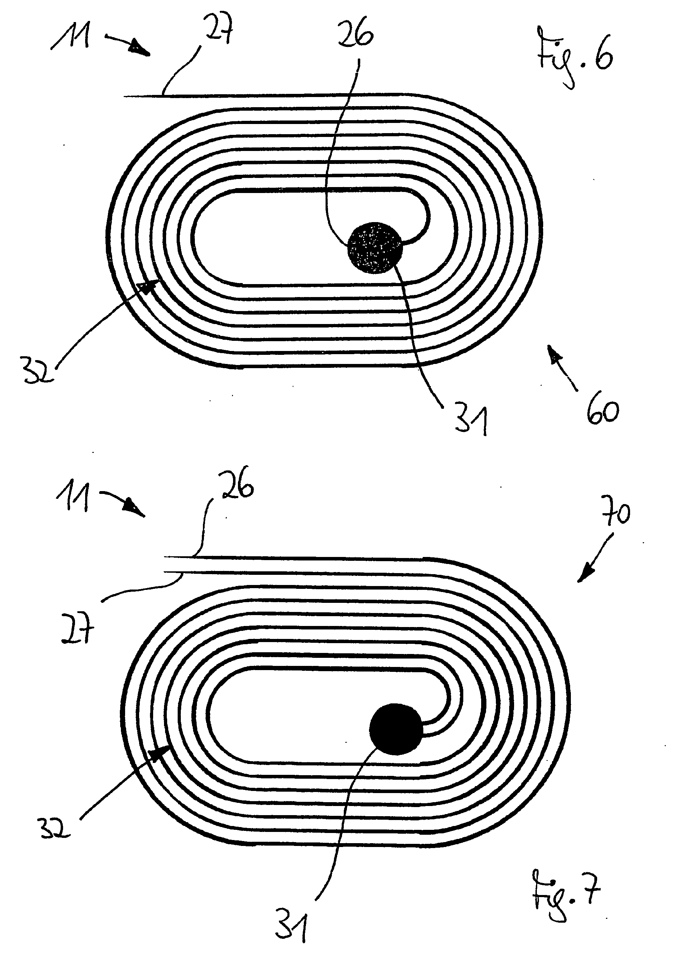

In der Figur 8 sind die elektrischen Kontakte des Sensorelements 11 andersartig ausgebildet als dies z.B. in der Figur 6 der Fall ist. Während bei dem Sensorelement 11 der Figur 6 die Kontakte 26, 27 am Anfang und am Ende der Spirale vorhanden sind, ist dies bei dem Sensorelement 11 der Figur 8 nicht der Fall. Statt dessen erstrecken sich dort. Kontakte 26', 27' jeweils derart über den Bereich der halbkreisförmigen Stücke der Spirale, dass nur noch der Bereich der Geradenstücke nicht von den Kontakten 26', 27' bedeckt ist.

Dies hat zur Folge, dass die halbkreisförmigen Stücke im Bereich der beiden Kontakte 26', 27' jeweils elektrisch kurzgeschlossen sind.

Während somit bei dem Sensorelement 11 der Figur 6 die aufeinanderfolgenden halbkreisförmigen Stücke und Geradenstücke der Spirale elektrisch eine Serienschaltung bilden, ist dies bei dem Sensorelement 11 der Figur 8 aufgrund der kurzschließenden Wirkung der Kontakte 26', 27' nicht der Fall. Statt dessen bilden dort die Geradenstücke der Spirale elektrisch eine Parallelschaltung, zu der die halbkreisförmigen Stücke keinen Beitrag leisten.

Wie bei dem Sensorelement 11 der Figur 6, so kann auch bei dem Sensorelement 11 der Figur 8 der elektrische Widerstand der Spirale in der beschriebenen Weise über die Kontakte 26', 27' ausgelesen werden. Bei dem Sensorelement 11 der Figur 8 ist jedoch der elektrische Widerstand kleiner als bei dem Sensorelement der Figur 6.

Im übrigen gelten für das Sensorelement 11 der Figur 8 die Erläuterungen zu den Figuren 1 bis 6 entsprechend.

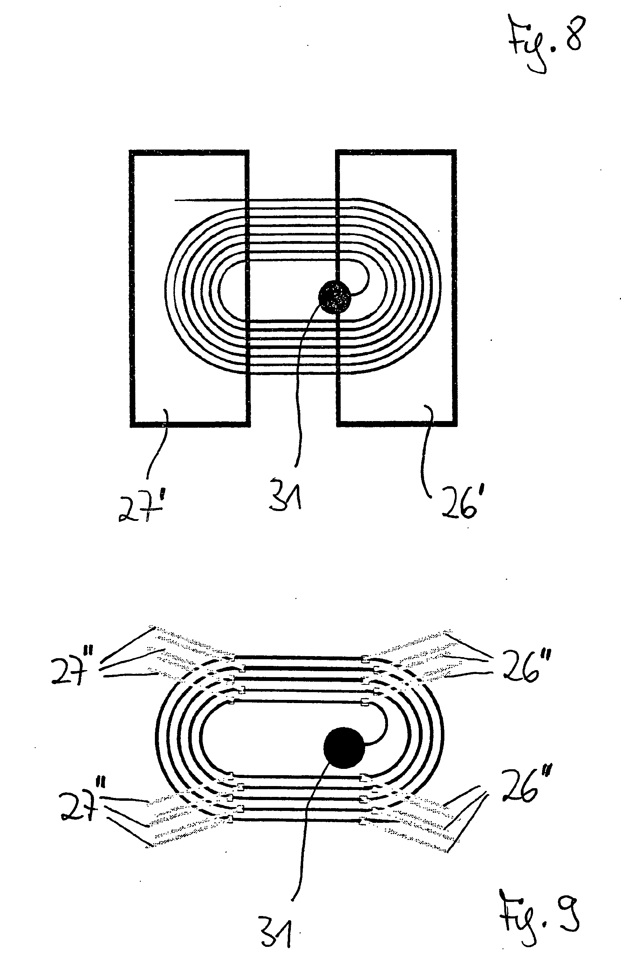

In der Figur 9 sind die elektrischen Kontakte des Sensorelements 11 andersartig ausgebildet als dies z.B. in der Figur 6 der Fall ist. Während bei dem Sensorelement 11 der Figur 6 die Kontakte 26, 27 am Anfang und am Ende der Spirale vorhanden sind, ist dies bei dem Sensorelement 11 der Figur 9 nicht der Fall. Statt dessen sind dort Kontakte 26", 27" am Anfang und am Ende eines jeden Geradenstücks vorhanden.

Die Anzahl der paarweise vorhandenen Kontakte 26", 27" entspricht somit der Anzahl der Geradenstücke. Vorzugsweise sind die Kontakte 26", 27" jeweils derart zueinander beabstandet, dass alle Geradenstücke etwa gleich lang sind.

Mit dieser Anordnung der Kontakte 26", 27" ist es möglich, den elektrischen Widerstand jedes einzelnen Geradenstücks separat auszulesen. Der gesamte elektrische Widerstand der Spirale kann dann aus diesen Teil-Widerständen abgeleitet werden.

Im übrigen gelten für das Sensorelement 11 der Figur 9 die Erläuterungen zu den Figuren 1 bis 6 entsprechend.

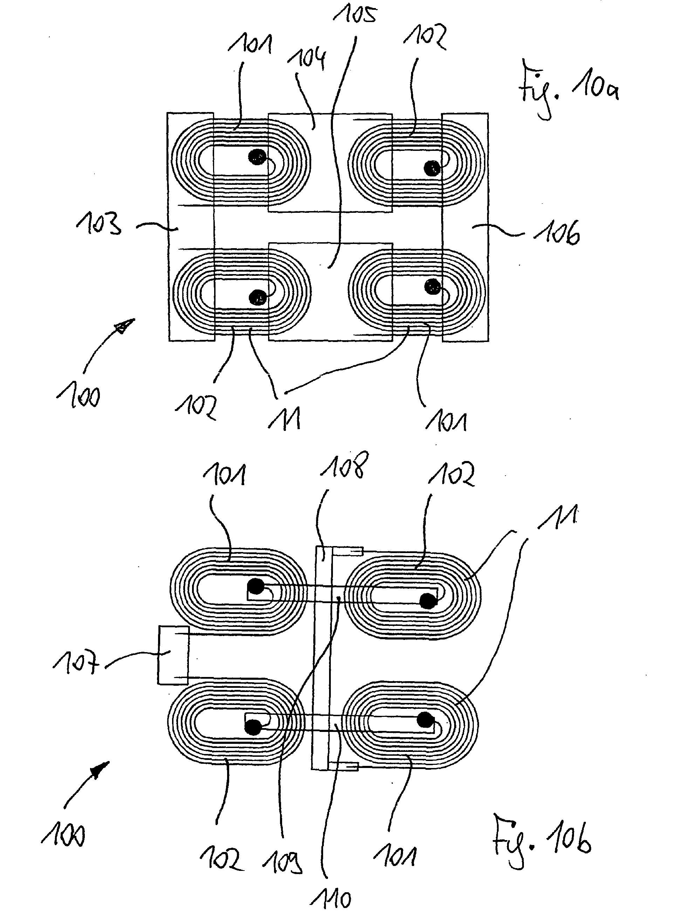

In den Figuren 10a und 10b sind jeweils vier Sensorelemente 11 zu einer Wheatstone-Brücke 100 zusammengesetzt. Bei den Sensorelementen 11 kann es sich um jegliche Ausführungsformen handeln, wie sie anhand der Figuren 3 bis 9 erläutert worden sind.

In den Wheatstone-Brücken 100 der Figuren 10a und 10b weisen die Spiralen von jeweils zwei Sensorelementen 11 einen Windungssinn auf, der entgegengesetzt zu den Spiralen der beiden jeweils anderen Sensorelemente 11 ausgerichtet ist. In den Figuren 10a und 10b sind die Spiralen, die im Uhrzeigesinn gewunden sind, mit dem Bezugszeichen 101 gekennzeichnet, während die Spiralen, die im GegenUhrzeigersinn gewunden sind, mit dem Bezugszeichen 102 versehen sind.

Bei der Wheatstone-Brücke 100 der Figur 10a sind Kontakte 103, 104, 105, 106 vorgesehen, die ähnlich wie bei dem Sensorelement 11 der Figur 8 jeweils die halbkreisförmigen Stücke der jeweiligen Sensorelemente 11 kurzschließen. Weiterhin sind diese Kontakte 103, 104, 105, 106 derart miteinander verbunden, dass die Geradenstücke der vier Sensorelemente 11 insgesamt eine elektrische Parallelschaltung bilden.

Bei der Wheatstone-Brücke 100 der Figur 10b sind Kontakte 107, 108, 109, 110 vorgesehen, die jeweils den Anfang und das Ende der Spiralen der jeweiligen Sensorelemente 11 miteinander verbinden. Die Kontakte 107, 108, 109, 110 sind dabei derart angeordnet und von den einzelnen Spiralen elektrisch isoliert, dass die Spiralen der Sensorelemente 11 insgesamt eine elektrische Reihenschaltung bilden.

Im Hinblick auf die in den Figuren 10a und 10b vorhandenen Sensorelemente 11 gelten dabei die Erläuterungen zu den Figuren 1 bis 9 entsprechend.

## Patentansprüche

1. Sensorelement (11) mit einem Schichtaufbau (20), der ohne eine Energieversorgung dazu geeignet ist, in dem Sensorelement (11) eine Veränderung der Magnetisierung hervorzurufen, wenn ein magnetisches Feld an dem Sensorelement (11) vorbeibewegt wird, sowie mehrere derartige Veränderungen zu speichern, **dadurch gekennzeichnet, dass** das Sensorelement (11) ein spiralförmiges Gebilde aufweist, das mit dem Schicht-aufbau (20) versehen ist.

2. Sensorelement (11) nach Anspruch 1, **dadurch gekennzeichnet, dass** in dem spiralförmigen Gebilde eine 180-Grad-Wand (42, 44, 45, 46) entsteht, wenn ein magnetisches Feld an dem Sensorelement (11) vorbeibewegt wird.

3. Sensorelement (11) nach Anspruch 2, **dadurch gekennzeichnet, dass** mehrere 180-Grad-Wände (42, 44, 45, 46) in dem spiralförmigen Gebilde speicherbar sind.

4. Sensorelement (11) nach einem der vorstehenden Ansprüche, **dadurch gekennzeichnet, dass** ein Ende des spiralförmigen Gebildes mit einem als Wandgenerator (31) bezeichneten Bereich verbunden ist.

5. Sensorelement (11) nach Anspruch 4, **dadurch gekennzeichnet, dass** der Wandgenerator (31) als etwa kreisförmige Fläche ausgebildet ist.

6. Sensorelement (11) nach Anspruch 4 oder 5, **dadurch gekennzeichnet, dass** der Wandgenerator (31) mit einem ersten elektrischen Kontakt (26) verbunden ist.

7. Sensorelement (11) nach einem der Ansprüche 4 bis 6, **dadurch gekennzeichnet, dass** das andere Ende des spiralförmigen Gebildes mit einem zweiten elektrischen Kontakt (27) verbunden ist.

8. Sensorelement (11) nach einem der Ansprüche 4 bis 7, **dadurch gekennzeichnet, dass** das andere Ende des spiralförmigen Gebildes spitz ausläuft.

9. Sensorelement (11) nach einem der vorstehenden Ansprüche, **dadurch gekennzeichnet, dass** das spiralförmige Gebilde einen Schichtaufbau (20) mit aufeinanderfolgend mindestens einer weichmagnetischen Schicht (21), mindestens einer unmagnetischen Schicht (22) und mindestens einer hartmagnetischen Schicht (23) besitzt.

10. Sensorelement (11) nach Anspruch 9, **dadurch gekennzeichnet, dass** die weichmagnetische Schicht (21) eine Sensorschicht darstellt, in der die Magnetisierung durch das Vorbeibewegen eines magnetischen Feldes verändert wird, und dass die hartmagnetische Schicht (23) eine Referenzschicht darstellt, in der die Magnetisierung durch das Vorbeibewegen eines magnetischen Feldes nicht verändert wird.

11. Sensorelement (11) nach Anspruch 9 oder 10, **dadurch gekennzeichnet, dass** eine antiparallele Magnetisierung in einem Bereich des spiralförmigen Gebildes einen erhöhten elektrischen Widerstand in diesem Bereich bewirkt.

12. Sensorelement (11) nach einem der Ansprüche 9 bis 11, **dadurch gekennzeichnet, dass** die Magnetisierung der Referenzschicht eine Orientierung etwa parallel zu dem Verlauf des spiralförmigen Gebildes und immer in dieselbe Richtung des spiralförmigen Gebildes aufweist.

13. Sensorelement (11) nach einem der Ansprüche 9 bis 11, **dadurch gekennzeichnet, dass** das spiralförmige Gebilde mehrere zueinander etwa parallel verlaufende Geradenstücke aufweist, und dass die Magnetisierung der Referenzschicht eine Orientierung aufweist, die etwa parallel zu den Geradenstücken ausgerichtet ist.

14. Sensorelement (11) nach einem der vorstehenden Ansprüche, **dadurch gekennzeichnet, dass** das spiralförmige Gebilde eine Doppelspirale darstellt, wobei eine der beiden Spiralen zur elektrischen Kontaktierung vorgesehen ist.

15. Sensorelement (11) nach einem der vorstehenden Ansprüche, **dadurch gekennzeichnet, dass** das spiralförmige Gebilde halbkreisförmige Stücke und Geradenstücke aufweist, und dass die halbkreisförmigen Stücke kurzgeschlossen sind und eine elektrische Kontaktierung bilden.

16. Sensorelement (11) nach einem der vorstehenden Ansprüche, **dadurch gekennzeichnet, dass** das spiralförmige Gebilde halbkreisförmige Stücke und Geradenstücke aufweist, und dass die Geradenstücke separat kontaktiert sind.

17. Wheatstone-Brücke (100) **gekennzeichnet durch** die Verwendung von vier Sensorelementen (11) nach einem der vorstehenden Ansprüche.

18. Umdrehungszähler (10) **gekennzeichnet durch** die Verwendung von mindestens einem Sensorelement (11) nach einem der vorstehenden Ansprüche.

19. Umdrehungszähler (10) nach Anspruch 18 **gekennzeichnet durch** mindestens einen Permanentmagneten (13, 14), der an dem Sensorelement (11) vorbeibewegt werden kann.

20. Umdrehungszähler (10) nach Anspruch 19, **dadurch gekennzeichnet, dass** das Vorbeibewegen des Permanentmagneten (13, 14) aus Sicht des Sensorelements (11) eine Drehung eines magnetischen Feldes um 180 Grad darstellt.

21. Umdrehungszähler (10) nach einem der Ansprüche 18 bis 20 **gekennzeichnet durch** die Verwendung in einem Kraftfahrzeug, insbesondere **durch** die Verwendung im Zusammenhang mit einer Lenkwelle des Kraftfahrzeugs.

## Claims

1. Sensor element (11) with a layered structure (20), which is suitable for causing a change in the magnetisation in the sensor element (11) without a power supply when a magnetic field is moved past the sensor element (11), and for storing a plurality of such changes, **characterised in that** the sensor element (11) has a spiral structure, which is provided with the layered structure (20).

2. Sensor element (11) according to Claim 1, **characterised in that** a 180-degree wall (42, 44, 45, 46) is produced in the spiral structure when a magnetic field is moved past the sensor element (11).

3. Sensor element (11) according to Claim 2, **characterised in that** a plurality of 180-degree walls (42, 44, 45, 46) can be stored in the spiral structure.

4. Sensor element (11) according to one of the preceding claims, **characterised in that** one end of the spiral structure is connected to a region designated as a wall generator (31).

5. Sensor element (11) according to Claim 4, **characterised in that** the wall generator (31) is constructed as a roughly circular area.

6. Sensor element (11) according to Claim 4 or 5, **characterised in that** the wall generator (31) is connected to a first electrical contact (26).

7. Sensor element (11) according to one of Claims 4 to 6, **characterised in that** the other end of the spiral structure is connected to a second electrical contact (27).

8. Sensor element (11) according to one of Claims 4 to 7, **characterised in that** the other end of the spiral structure tapers to a point.

9. Sensor element (11) according to one of the preceding claims, **characterised in that** the spiral structure has a layered structure (20) with at least one soft magnetic layer (21), at least one non-magnetic layer (22) and at least one hard magnetic layer (23) arranged one above the other.

10. Sensor element (11) according to Claim 9, **characterised in that** the soft magnetic layer (21) constitutes a sensor layer in which the magnetisation is changed by moving a magnetic field past it, and that the hard magnetic layer (23) constitutes a reference layer in which the magnetisation is not changed by moving a magnetic field past it.

11. Sensor element (11) according to Claim 9 or 10, **characterised in that** an antiparallel magnetisation in one region of the spiral structure effects an increased electrical resistance in this region.

12. Sensor element (11) according to one of Claims 9 to 11, **characterised in that** the magnetisation of the reference layer has an orientation roughly parallel to the course of the spiral structure and always in the same direction as the spiral structure.

13. Sensor element (11) according to one of Claims 9 to 11, **characterised in that** the spiral structure has a plurality of straight sections running roughly parallel to one another, and that the magnetisation of the reference layer has an orientation which is aligned roughly parallel to the straight sections.

14. Sensor element (11) according to one of the preceding claims, **characterised in that** the spiral structure constitutes a double spiral, one of the two spirals being provided to form an electrical contact.

15. Sensor element (11) according to one of the preceding claims, **characterised in that** the spiral structure has semicircular and straight sections, and that the semicircular sections are shortcircuited and form an electrical contact.

16. Sensor element (11) according to one of the preceding claims, **characterised in that** the spiral structure has semicircular and straight sections, and that the straight sections are connected separately.

17. Wheatstone bridge (100), **characterised by** the use of four sensor elements (11) according to one of the preceding claims.

18. Revolution counter (10), **characterised by** the use of at least one sensor element (11) according to one of the preceding claims.

19. Revolution counter (10) according to Claim 18, **characterised by** at least one permanent magnet (13, 14), which can be moved past the sensor element (11).

20. Revolution counter (10) according to Claim 19, **characterised in that** the moving past of the permanent magnet (13, 14) constitutes a rotation of a magnetic field by 180 degrees from the point of view of the sensor element (11).

21. Revolution counter (10) according to one of Claims 18 to 20, **characterised by** the use in a motor vehicle, in particular by the use in conjunction with a motor vehicle steering shaft.

## Revendications

1. Capteur (11) ayant une structure en couches (20), laquelle, sans alimentation en énergie, convient pour provoquer dans le capteur (11) une variation de la magnétisation lorsqu'un champ magnétique passe à proximité du capteur (11) ainsi que pour mémoriser plusieurs variations de ce type, **caractérisé en ce que** le capteur (11) présente une formation en spirale, laquelle est pourvue de la structure en couches (20).

2. Capteur (11) selon la revendication 1, **caractérisé en ce que**, dans la formation en spirale, il se crée une paroi à 180 ° (42, 44, 45, 46) lorsqu'un champ magnétique passe à proximité du capteur (11).

3. Capteur (11) selon la revendication 2, **caractérisé en ce que** plusieurs parois à 180 ° (42, 44, 45, 46) peuvent être mémorisées dans la formation en spirale.

4. Capteur (11) selon l'une des revendications précédentes, **caractérisé en ce qu'**une extrémité de la formation en spirale est reliée à une zone désignée en tant que générateur de parois (31).

5. Capteur (11) selon la revendication 4, **caractérisé en ce que** le générateur de parois (31) est réalisé sous la forme d'une surface approximativement circulaire.

6. Capteur (11) selon la revendication 4 ou 5, **caractérisé en ce que** le générateur de parois (31) est relié à un premier contact électrique (26).

7. Capteur (11) selon l'une des revendications 4 à 6, **caractérisé en ce que** l'autre extrémité de la formation en spirale est reliée à un second contact électrique (27).

8. Capteur (11) selon l'une des revendications 4 à 7, **caractérisé en ce que** l'autre extrémité de la formation en spirale se termine en pointe.

9. Capteur (11) selon l'une des revendications précédentes, **caractérisé en ce que** la formation en spirale possède une structure en couches (20) avec, se suivant les unes sur les autres, au moins une couche magnétique douce (21), au moins une couche amagnétique (22) et au moins une couche magnétique dure (23).

10. Capteur (11) selon la revendication 9, **caractérisé en ce que** la couche magnétique douce (21) représente une couche de capteur dans laquelle la magnétisation est modifiée par le passage d'un champ magnétique à proximité et **en ce que** la couche magnétique dure (23) représente une couche de référence dans laquelle la magnétisation n'est pas modifiée par le passage d'un champ magnétique à proximité.

11. Capteur (11) selon la revendication 9 ou 10, **caractérisé en ce qu'**une magnétisation antiparallèle dans une zone de la formation en spirale suscite une résistance électrique plus forte dans cette zone.

12. Capteur (11) selon l'une des revendications 9 à 11, **caractérisé en ce que** la magnétisation de la couche de référence présente une orientation approximativement parallèle au tracé de la formation en spirale et toujours dans le même sens que la formation en spirale.

13. Capteur (11) selon l'une des revendications 9 à 11, **caractérisé en ce que** la formation en spirale présente plusieurs éléments droits approximativement parallèles entre eux et **en ce que** la magnétisation de la couche de référence présente une orientation qui est dirigée à peu près parallèlement aux éléments droits.

14. Capteur (11) selon l'une des revendications précédentes, **caractérisé en ce que** la formation en spirale représente une double spirale, l'une des deux spirales étant prévue pour l'établissement du contact électrique.

15. Capteur (11) selon l'une des revendications précédentes, **caractérisé en ce que** la formation en spirale présente des éléments en forme de demi-cercles et des éléments droits et **en ce que** les éléments en forme de demi-cercles sont court-circuités et établissent un contact électrique.

16. Capteur (11) selon l'une des revendications précédentes, **caractérisé en ce que** la formation en spirale présente des éléments en forme de demi-cercles et des éléments droits et **en ce que** les éléments droits sont mis en contact séparément.

17. Pont de Wheatstone (100) **caractérisé par** l'utilisation de quatre capteurs (11) selon l'une des revendications précédentes.

18. Compte-tours (10) **caractérisé par** l'utilisation d'au moins un capteur (11) selon l'une des revendications précédentes.

19. Compte-tours (10) selon la revendication 18, **caractérisé par** au moins un aimant permanent (13, 14) qui peut être déplacé à proximité du capteur (11).

20. Compte-tours (10) selon la revendication 19, **caractérisé en ce que** le passage de l'aimant permanent (13, 14) en vue du capteur (11) représente une rotation de 180 ° d'un champ magnétique.

21. Compte-tours (10) selon l'une des revendications 18 à 20, **caractérisé par** son utilisation dans un véhicule automobile, en particulier par son utilisation en rapport avec un arbre de direction du véhicule automobile.
